# EUROPEAN PATENT SPECIFICATION

(11) **EP 1 613 525 B1**
(45) Date of publication and mention of the grant of the patent: **15.08.2007**
(21) Application number: 03726964.4
(22) Date of filing: 03.04.2003
(51) Int. Cl.: B62J 1/02

(54) **BICYCLE SEAT ASSEMBLY**
FAHRRADSITZAUFBAU
ENSEMBLE SELLE DE BICYCLETTE

(43) Date of publication of application: 11.01.2006
(73) Proprietor: Lawson, Donald Garth, 6571 Knysna (ZA)
(72) Inventor: Lawson, Donald Garth, 6571 Knysna (ZA)
(74) Representative: Townsend, Victoria Jayne
(86) International application number: PCT/ZA2003/000045
(87) International publication number: WO 2004/087488

(56) References cited:
- WO-A-01/10704
- WO-A-95/25662
- US-A- 4 773 705
- US-A- 5 308 140

## Description

### TECHNICAL FIELD OF THE INVENTION

This invention relates to a bicycle seat assembly.

### BACKGROUND ART

Saddle discomfort is a major problem that millions of cyclists experience every day. For decades, bicycle manufacturers have been aware of these shortcomings. Dozens of different saddles have been experimented with, and today there are literally hundreds of different saddle designs to choose from... all kinds of shapes, sizes and materials.

Recently another potentially more serious problem has begun to emerge... that of physical damage over time to the private parts leading to sexual dysfunction.

For men, the problem lies in the body weight that's being placed on the perineum, the area located between the anus and the scrotum. In effect, the male rider's weight is being used against him to compress and even crush the arteries and nerves in his perineum, often leading to a number of problems, including lessening of sexual performance, penile numbness, urinary tract infections, difficulty urinating, yeast infections and prostate inflammation - and ultimately impotence.

Women also report chronic soreness from padded and cut-out saddles that are designed with the male anatomy in mind. Here, the main problem with a conventional saddle is the lack of width to adequately support a woman's ischiopubic rami and ischial tuberosities. And its convex shape exerts pressure on the perineum area leading to the development of urinary tract infections or pain from this chafing and pressure.

None of this is new to the bicycle industry, which continues to search for answers to these problems. Several partial solutions have been developed, but all have at least one or more drawbacks.

One solution appears to be the bicycle seat - as opposed to the bicycle saddle that is straddled by the human body and fits between the legs up into the crotch area. The bicycle seat is sat upon - it is not straddled. Consequently, there is no friction or pressure between the legs and up into the crotch. Thus bicycle saddles have a horn; bicycle seats do not.

However, bicycle seats are not "hornless saddles". Up to fifty per cent of the weight of a cyclist is borne by the saddle horn - this is the prime cause of saddle-induced pain and physical damage to the crotch area.

Not having a horn, a bicycle seat bears virtually the full sitting weight of the cyclist-less only the minor distribution of some slight body weight via the arms on to the handlebar grips, and via the legs onto the pedals.

In order to function most effectively, the bicycle seat is preferably attached at the seat's leading edge to a standard seat post by way of a conventional saddle clamp at the top of said seat post.

This provides enhanced performance of a bicycle seat, and has been patented in US 6,079,775 by the Applicants for this additional patent. [see Figure 6]

Because of the above positioning of the leading edge of the seat above the seat post line, the almost full weight of the cyclist is leveraged around the pivot point of the saddle clamp fixed under the leading edge of the seat. Consequently the leverage exerted by the weight of the cyclist's body onto the bicycle seat is enormous.

This leverage is simply too great for the conventional saddle clamp situated at the top of the seat post to manage. The spring-steel wire rails twist inside the saddle clamp, causing the seat to tilt significantly downwards to either side and in turn causing the cyclist to come off.

Two prior art patents are discussed briefly as being relevant prior art. US 5 308 140 (Stella Yu) describes a metal saddle-support mounted to the underside of a saddle. It comprises a U-shaped horizontal portion with left and right arms having upwardly curving distal ends, each having an extension disposed above and parallel to the left and right arm. An adjustment unit is included and comprises a pair of cylindrical portions clamped between the arms and extensions. This arrangement will not prevent or reduce the twisting stresses placed on the saddle during pedalling, although it may act as a shock-absorber to reduce discomfort caused by jolting.

In US 4 773 705 (Terranova) a bicycle seat is described which has a short in depth and wide support surface which is contoured to have a pair of concave portions for engaging cyclists buttocks. The seat is mounted on a pair of U-shaped frame members. These have been found to not cope with the twisting stresses of pedalling, resulting in dangerous tilting of the seat.

It is therefore an object of this invention to provide a means to re-distribute these huge leverage forces away from critical failure points and to disperse the stresses more or less evenly throughout the seat chassis and wire rails to the extent that the possibility of chassis failure through the application of substantially vertical forces, and the accompanying huge leverage stresses peculiar to a bicycle seat, are eliminated.

### DISCLOSURE OF THE INVENTION

According to the invention, a bicycle seat assembly includes a supporting surface for the body of the cyclist and, mounted on the underside of a chassis, a system of twin rails including a rear rail clamp for preventing movement of the vertical portions of the rails independently of each other or in tandem with each other; and means for damping the stresses induced by the mass of the cyclist in the seat and/or chassis and/or rails during pedalling of the bicycle.

The twin rails are divided into a left and right hand side relative to the longitudinal axis of the bicycle.

In the preferred form of the invention, the damping means comprises a torsion bar.

In the preferred form of the invention, one or more torsion bars are provided, associated with the rails, preferably incorporated into the rails.

Also in the preferred form, one or more torsion bars are provided for each of the left and right rails of the chassis.

Also in the preferred form, each rail is configured to include a torsion box construction.

Each rail comprises a single length of spring-steel wire and includes
a middle section which is inserted into the saddle clamp, a forward end section and
a rear end section, relative to the front and rear of the bicycle seat.

The middle section comprises a straight section of wire orientated substantially parallel to the longitudinal axis of the bicycle frame when the seat is located thereon. The forward end section (section D in the accompanying drawings) comprises a loop in which the free end of the wire is bent upwards and backwards along the plane of the middle section (to form what is referred to as a "bull-nose") and then outwardly toward the side of the seat at an angle to the middle section. The angle is preferably substantially 90 degrees.

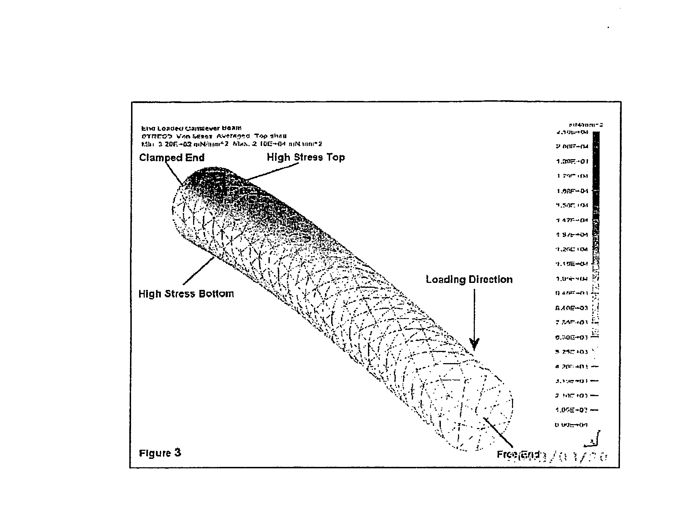

The rear end section comprises:
a first section (section A of Figure 3) upwardly directed substantially perpendicular to the middle section but somewhat outwardly to the plane of the middle section,
a second section (section B) substantially at right angles to section A and directed outwardly (sideways) and substantially parallel to the forward end section D,
and a third section (section C) bent forwardly substantially at right angles to the second section (section B) towards the end point of section D.

The left and right hand rails are mirror images of each other.

The rails are secured to the underside of the seat by means of clamps or the like fasteners, located along sections B, C and D.

The wire rail configuration as described, is designed so that section B acts as a torsion bar and that each rail may be referred to as what can be construed a torsion box.

The importance of the torsion box lies in its redistribution of downward forces being applied by the mass of the cyclist to section C.

When a cyclist sits on the seat, section C takes up a significant proportion of the cyclist's weight and both the section C rail and its fasteners carry a substantial load.

In addition, section C also has the very important function of preventing the chassis and the seat material between sections B and D from being forced towards each other. This would cause the chassis and seat material to bow as like a hammock which would generate high stresses along sections B and D, both in the rails and in the fasteners.

The importance and functioning of the torsion bar and torsion box are illustrated in the accompanying drawings, Figures 3 - 6.

With reference to Figure 3, this is a demonstration of how a cantilever beam operates. The beam is rigidly fixed at one end and loaded with a perpendicular downward force at the free end. The resultant stresses are observed in the Von Mises Stress analysis printout. High stresses are evident in the top and bottom fibres of the beam at the fixed end.

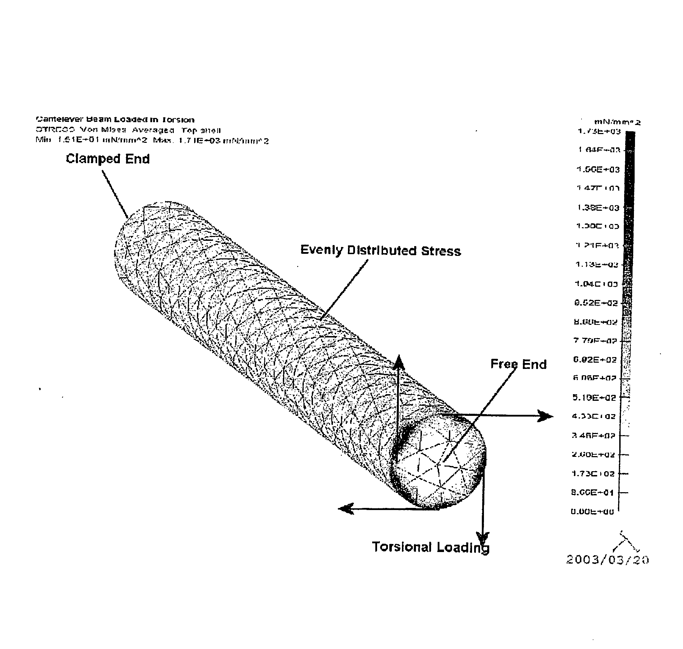

In Figure 4, the same beam is now torsionally loaded (twisted) at the free end. The Von Mises stress analysis shows that all the stresses are evenly distributed around the entire surface of the length of the beam.

In the torsion box construction of the invention, section B functions in the same manner as does the torsionally loaded beam in Figure 4, with section C acting as the torque arm to generate torsion within section B and thereby rendering section B a torsion bar.

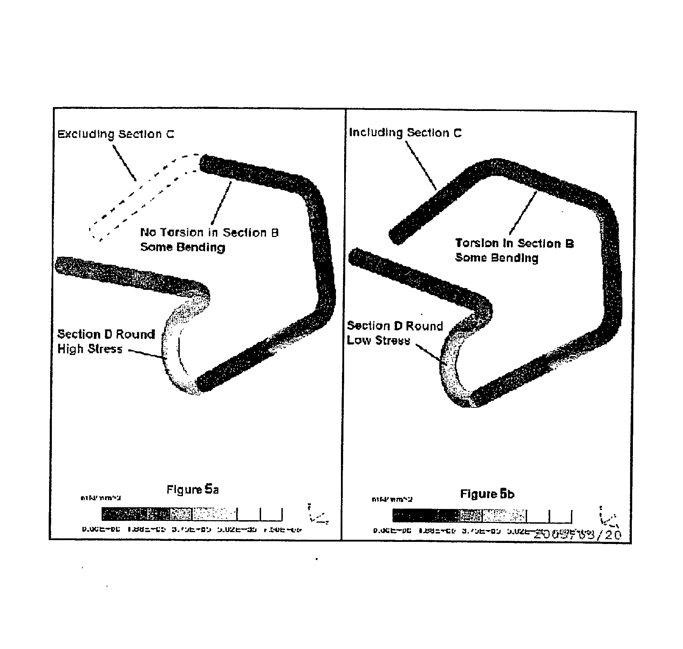

Referring to Figures 5a and 5b, these CAD printouts show the results of contact stress analyses conducted on the wire rails.

In Figure 5a, section C of the rail has been removed, having the effect of rendering section B a simple cantilever bar as opposed to a torsion bar. As is clear from Figure 5a, support for the mass of the cyclist beyond the end of section B and section D has to be supplied by the chassis and seat material. And section D carries some 70 per cent of the downward forces generated by the mass of the cyclist. As a result, section D is loaded like a cantilever arm (see Figure 3) and this distributes unacceptably high stresses (light shading) into the section D round. This would result in an unstable seat, the fairly rapid destruction of the fasteners securing section D, the resultant ejection of the wire rail from the section D fasteners and the collapse of the seat.

Figure 5b shows the results of the stress analysis test with section C included. Much of the mass of the cyclist previously borne by section D is now taken up by section C, virtually reversing the distribution of the mass of the cyclist
- from 70 per cent carried by section D and 30 per cent by section B
- to 35 per cent carried by section D and 65 per cent by sections C and B.

The stresses in the fasteners securing section D and in the section D round are thereby significantly reduced, thus averting the destruction of the fasteners securing section D and also helping to stabilise the seat.

At the rear, the absorption of 65 per cent of the mass of the cyclist is made possible only by section B functioning as a torsion bar and enabling this huge increase in stress absorption to be distributed evenly throughout sections C and B without any significant stress points being evident.

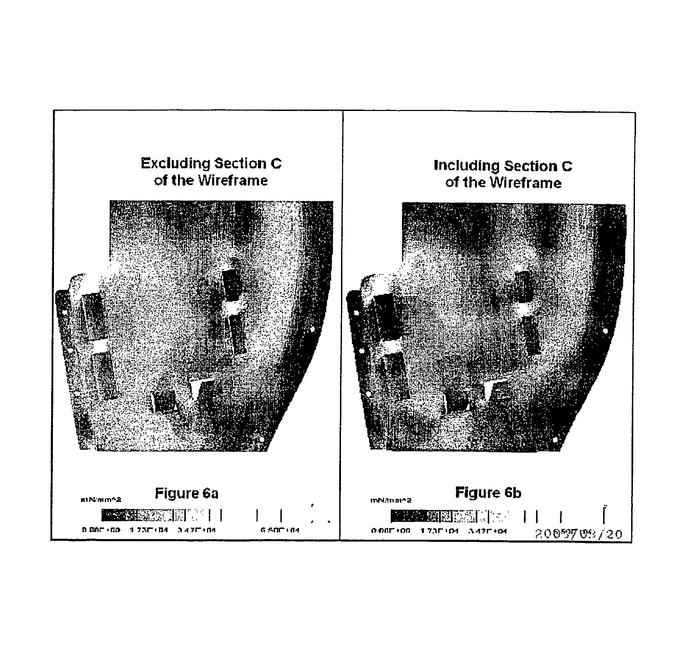

Referring to Figures 6a and 6b, the CAD printouts show the results of stress analyses conducted on the seat's chassis.

The positive effect of the torsion box structure is illustrated with reference to Figures 6a and 6b. The wide-ranging redistribution of stresses brought about by the torsion bar box is confirmed in an analysis of the effect that it has on stress in the chassis and especially in the chassis' wire rail fasteners.

Figure 6a shows the unacceptably high levels of stress experienced in the front wire rail fasteners of the chassis when section C is not present and section D has to bear 70 per cent of the mass of the cyclist.

Figure 6b shows that when section C is present, the front wire rail fasteners for section D are able to carry easily 35 per cent of the mass of the cyclist and that the remaining 65 per cent of the cyclist's mass is able to be borne easily by sections C and B. This is possible only because section B functions as a torsion bar to produce a torsion box which then evenly distributes the large increase in stresses throughout the combined length of sections C and B of the wire rail and into the relevant six wire rail fasteners. Thus critical weak spots are eliminated.

Whilst it is important to note that the stresses induced by the mass of the cyclist during pedalling are significantly higher in cases where the seat is attached to the seatpost in the preferred position, namely that in which the leading edge of the seat is aligned with the seatpost, these stresses are still present to a degree in all saddle-type seats.

However according to a second aspect of the invention, a bicycle seat assembly includes a supporting surface for the body of the cyclist, the supporting surface being attached to a seatpost at its leading edge; a chassis, and mounted on the underside of the chassis, a system of twin rails including a rear rail clamp for preventing movement of the vertical portions of the rails independently of each other or in tandem with each other; and means for damping the stresses induced by the mass of the cyclist in the seat and/or the chassis and/or the rails during pedalling of the bicycle.

### BRIEF DESCRIPTION OF THE DRAWINGS

Figure 1 is an isometric view of a bicycle seat assembly according to the invention;
Figure 2 is an isometric top view of the seat of Figure 1 showing the position of the wire rails thereunder;
Figure 3 is a Von Mises Stress analysis test result of a cantilever beam;
Figure 4 is a Von Mises Street analysis test result of the beam of Figure 3 torsionally at its free ends;
Figure 5 a and b are stress analysis test results of a rail without and with a torsion box respectively;
   and
Figure 6 a and b are contact stress analysis stress results for a chassis affixed to rails without and with a torsion box structure.

### DESCRIPTION OF THE BEST MODE

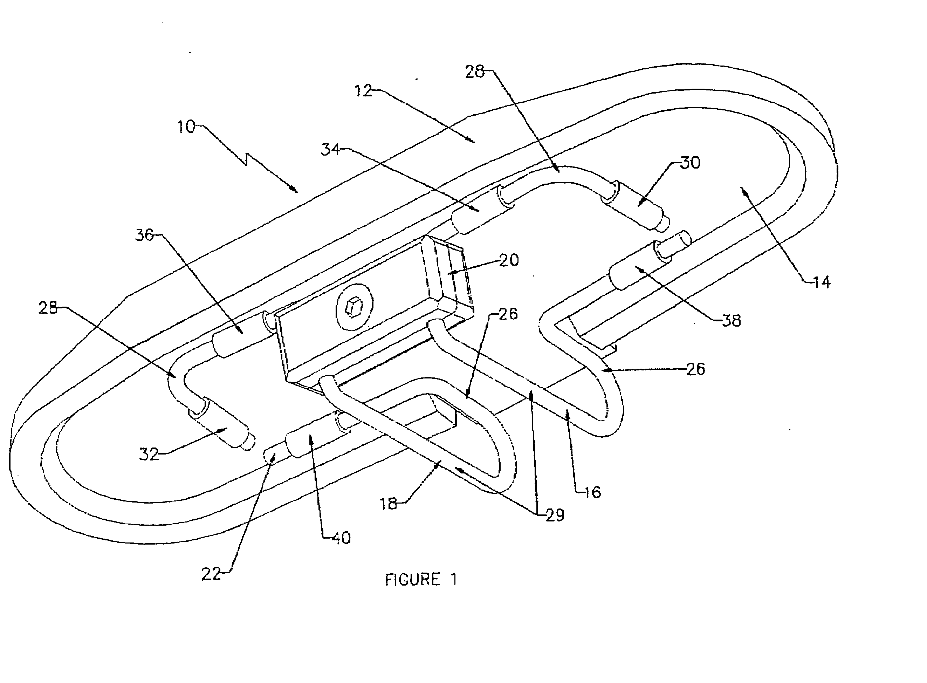

In Figure 1, a bicycle seat assembly 10 is shown to comprise a seat 12., a chassis 14 comprising a system of twin rails 16, 18 secured to the underside of the seat, and a rear rail clamp 20 locking the rails together.

The rear rail clamp 20 secures the left and right hand rails together preventing them from moving independently of each other and twisting at the clamp which secures the seat to the seat post. This minimises sideways and downward movement of the left and right rails and hence of the seat. It does not however eliminate the downward forces and attendant stresses which occur in the rails during pedalling. This problem is addressed by the configuration of the rails themselves.

The rails which are mirror images of each other, are shown to comprise single lengths of spring steel round wire 22 and for the purposes of description, may be split into a middle section 24 and two end sections, namely a forward end section 26 (proximate the front of the seat) and a rear end section 28.

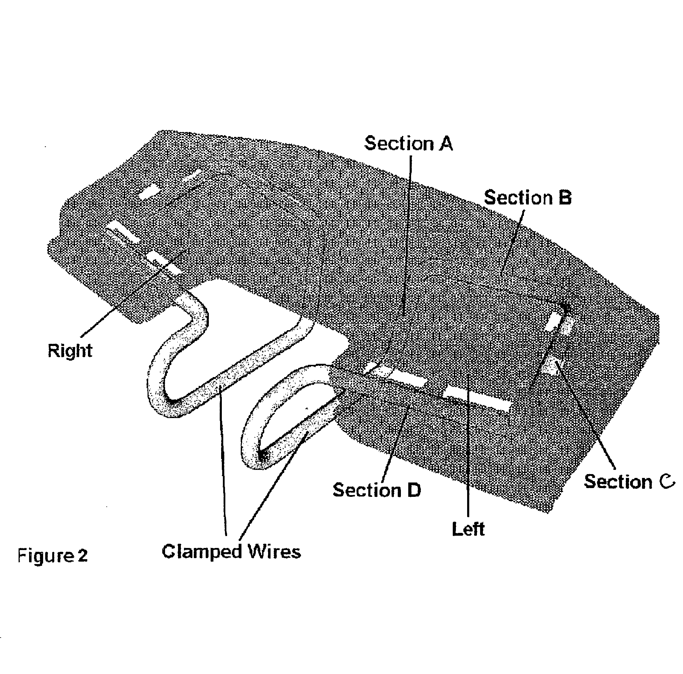

The middle section 24 which fits into the saddle clamp, is a straight section of wire running parallel to the longitudinal axis of the bicycle frame when the seat is in position on the bicycle. The forward end section 26 (section D in Figure 2) has a loop formed by bending the wire back on itself, along the line of the middle section 24, and outwardly toward the side of the seat at right angles to the middle section.

The rear end section 28 may be described in three sections, A, B and C (see Figure 2). Section A adjoins the middle section and is substantially perpendicularly thereto. In addition it is bent upwards towards the seat and is secured by the rear rail clamp. Section B is bent at right angles to section A towards the outer edge of the seat. Finally, section C, is bent at right angles to section B and is directed parallel to the middle section and towards the front of the seat.

The rails are secured to the underside of the seat by clamps or clips 30 and 32, 34 and 36 as well as 38 and 40 in sections C, B and D respectively (see Figure 1).

## Claims

1. A bicycle seat assembly (10) including a supporting surface (12) for the body of the cyclist and, mounted on the underside of a chassis, a system of twin rails (16, 18), **characterised in that** the system includes a rear rail clamp (20) for preventing movement of the vertical portions of the rails independently of each other or in tandem with each other and **in that** the rails include means for damping the stresses induced by the mass of the cyclist in the seat and/or chassis and/or rails during pedalling of the bicycle.

2. A bicycle seat (10) according to claim 1, **characterised in that** the twin rails (16, 18) are divided into a left and right hand side relative to the longitudinal axis of the bicycle.

3. A bicycle seat (10) according to claim 1 or claim 2 **characterised in that** the damping means comprises one or more torsion bars.

4. A bicycle seat (10) according to claim 3 **characterised in that** the torsion bar(s) are incorporated into the rails.

5. A bicycle seat (10) according to claim 2 **characterised in that** one or more torsion bars are provided for each of the left and right rails of the chassis.

6. A bicycle seat (10) according to any of the above claims **characterised in that** each rail is configured to include a torsion box construction.

7. A bicycle seat (10) according to any of the above claims **characterised in that** each rail comprises a single length of spring-steel wire (22) and includes a middle section (24) which is inserted into the saddle clamp (30), a forward end section (26) and a rear end section (28) relative to the front and rear of the bicycle seat (12).

8. A bicycle seat (10) according to claim 7 **characterised in that** the middle section comprises a straight section of wire orientated substantially parallel to the longitudinal axis of the bicycle frame when the seat is located thereon.

9. A bicycle seat (10) according to claim 7 **characterised in that** the forward end section (D) comprises a loop in which the free end of the wire is bent upwards and backwards along the plane of the middle section (24) and then outwardly toward the side of the seat (12) at an angle to the middle section (24).

10. A bicycle seat (10) according to claim 9 **characterised in that** the angle is substantially ninety (90°) degrees.

11. A bicycle seat (10) according to claim 7 **characterised in that** the rear end section (28) comprises:
a first section (A) upwardly directed substantially perpendicular to the middle section (24) but somewhat outwardly to the plane of the middle section (24), a second section (B) substantially at right angles to the first section (A) and directed outwardly and substantially parallel to the forward end section (D) and a third section (C) bent forwardly substantially at right angles to the second section (B) towards the end point of the forward end section (D).

12. A bicycle seat (10) according to claim 7 **characterised in that** the left and right hand rails (16, 18) are mirror images of each other.

13. A bicycle seat (10) according to any of the above claims **characterised in that** the rails (16, 18) are secured to the underside of the seat (12) by means of clamps (30) or the like fasteners, located along the second, third and forward end sections (B, C, D).

14. A bicycle seat (10) according to claims 7 to 13 **characterised in that** the second section (B) of the rear end section (28) of each rail acts as a torsion bar.

15. A bicycle seat assembly (10) according to any preceding claim, wherein the supporting surface (12) is attached to a seatpost at its leading edge.

## Patentansprüche

1. Eine Fahrradsattelkonstruktion (10), die für den Körper des Fahrers eine unterstützende Fläche (12) enthält, und die ein auf der Unterseite des Fahrgestells angebrachtes Doppelschienensystem (16, 18) aufweist, **dadurch gekennzeichnet, daß** das System eine hintere Schienenklammer (20) einschließt um Bewegung der senkrechten Schienenteile untereinander voneinander unabhängig oder in Tandem miteinander zu verhindern und darin **gekennzeichnet**, daß die Schienen Möglichkeit zum Dämpfen der Belastung einschließen, welche durch das Gewicht des Fahrradfahrers auf dem Sitz und/oder des Fahrgestells und/oder der Schienen während des Fahrradfahrens hervorgerufen wird.

2. Ein Fahrradsattel (10) nach Patentanspruch 1 **dadurch gekennzeichnet, daß** die Doppelschienen (16, 18) in eine rechte und eine linke Seite relativ zur Längsachse des Fahrrads geteilt sind.

3. Ein Fahrradsattel (10) nach Patentanspruch 1 oder Patentanspruch 2 **dadurch gekennzeichnet, daß** das Dämpfermittel eine oder mehrere Torsionstangen enthält.

4. Ein Fahrradsattel (10) nach Patentanspruch 3 **dadurch gekennzeichnet, daß** die Torsionstange(n) in die Schienen mit eingebaut sind.

5. Ein Fahrradsattel (10) nach Patentanspruch 2 **dadurch gekennzeichnet, daß** eine oder mehrere Torsionstangen für jede der linken und rechten Schienen des Fahrgestells gestellt werden.

6. Ein Fahrradsattel (10) nach jedem der oben genannten Patentansprüche **dadurch gekennzeichnet, daß** jede Schiene so gestaltet ist, daß eine Torsiongehäusekonstruktion mit eingeschlossen ist.

7. Ein Fahrradsattel (10) nach jedem der oben genannten Patentansprüche **dadurch gekennzeichnet, daß** jede Schiene eine einzelne Länge aus Federstahldraht (22) enthält und ein Mittelstück (24), welches in die Sattelklemmbacke (30) eingeführt ist, ein vorderes Endstück (26) und ein hinteres Endstück (28) relativ zur Vorderseite und Rückseite des Fahrradsattels (12) einschließt.

8. Ein Fahrradsattel (10) nach Patentanspruch 7 **dadurch gekennzeichnet, daß** das Mittelteil einen geraden Drahtabschnitt aufweist, das im wesentlichen parallel zur Längsachse des Fahrradrahmens ausgerichtet ist, wenn der Sattel darauf platziert ist.

9. Ein Fahrradsattel (10) nach Patentanspruch 7 **dadurch gekennzeichnet, daß** das Vorderteilende (D) eine Schlinge enthält, worin das freie Ende des Drahtes nach oben und rückwärts entlang der Ebene des Mittelteils (24) und dann nach außen der Sattelseite (12) zu, in einem Winkel zum Mittelteil (24) gebogen ist.

10. Ein Fahrradsattel (10) nach Patentanspruch 9 **dadurch gekennzeichnet, daß** der Winkel im wesentlichen neunzig (90°) beträgt.

11. Ein Fahrradsattel (10) nach Patentanspruch 7 **dadurch gekennzeichnet, daß** das hintere Endstück (28) folgendes einschließt:
Ein erstes Stück (A),das nach oben gewendet, im wesentlichen senkrecht zum Mittelstück (24) aber etwas nach außen zur Ebene des Mittelstücks (24) steht, ein zweites Stück (B), das im wesentlichen im rechten Winkel zum ersten Stück (A) steht und nach außen und im wesentlichen parallel zum Vorderteilende (D) zeigt, und ein drittes Stück (C), das wesentlich nach vorn im rechten Winkel zum zweiten Stück (B) zum Endpunkt des vorderen Endstückes (D) zu gebeugt ist.

12. Ein Fahrradsattel (10) nach Patentanspruch 7 **dadurch gekennzeichnet, daß** die linke und rechter Hand Schiene (16, 18) voneinander Spiegelbilder sind.

13. Ein Fahrradsattel (10) nach jedem der oben genannten Patentansprüche **dadurch gekennzeichnet, daß** die Schienen (16, 18) an der Unterseite des Sattels (12) mit Hilfe von Klemmbacken (30) oder ähnlichen Haltern befestigt sind, die sich entlang den zweiten, dritten und vorderen Endstücken (B, C,D) befinden.

14. Ein Fahrradsattel (10) nach Patentanspruch 7 bis 13 **dadurch gekennzeichnet, daß** der zweite Teil (B) des hinteren Endabschnittes (28) jeder Schiene als Torsionstange dient.

15. Eine Fahrradsattelkonstruktion (10) nach jedem der vorhergehenden Patentansprüche, wobei die tragende Oberfläche (12) auf einer Sitzstange an deren obersten Rand befestigt ist.

## Revendications

1. Un assemblage d'une selle pour bicyclettes (10) comprenant une surface portante (12) pour le corps du cycliste et un système de rails jumelés (16,18) monté sur la coté inférieure du châssis, **caractérisé** de sorte que le système comprenne un rail garde-frein arrière (20) pour éviter un mouvement des parts verticaux des rails d'une manière indépendante l'un de l'autre ou en tandem l'un avec l'autre et de sorte que les rails comprennent des moyens pour amortir les forces enduites par la masse du cycliste dans la selle et / ou le châssis et / ou des rails en pédalant la bicyclette.

2. Une selle pour bicyclettes (10) selon la revendication 1, **caractérisée** de sorte que les rails jumelés (16, 18) soient divisés en côté gauche et en côté droite relatif à l'axe longitudinal du bicyclette.

3. Une selle pour bicyclettes (10) selon la revendication 1 ou la revendication 2 **caractérisée** de sorte que le moyen d'amortissage comprenne une ou plusieurs barres de torsions.

4. Une selle pour bicyclettes (10) selon la revendication 3 **caractérisée** de sorte que la barre ou les barres de torsion soient incorporées aux rails.

5. Une selle pour bicyclettes (10) selon la revendication 2 **caractérisée** de sorte qu'une ou plusieurs barres de torsion soient pourvues pour chaque rail de la droite et de la gauche du châssis.

6. Une selle pour bicyclettes (10) selon quelconque revendication citée en haut **caractérisée** de sorte que chaque rail est configuré à comprendre une construction de boîte de torsion.

7. Une selle pour bicyclettes (10) selon quelconques revendications citées en haut **caractérisée** de sorte que chaque rail comprenne une seule longueur de fil d'acier à ressorts (22) et comprenne une section centrale (24) laquelle est insérée dans le bloqueur de selle (30), une partie finale en avant (26) et une partie en arrière (28) relatif au front et à l'arrière de la selle pour bicyclette (12).

8. Une selle pour bicyclettes (10) selon la revendication 7, **caractérisée** de sorte que la partie centrale comprenne une section droite de fil orienté substantiellement en parallèle à l'axe longitudinale du cadre de la bicyclette au moment que la selle y est localisée.

9. Une selle pour bicyclettes (10) selon la revendication 7, **caractérisée** de sorte que la section finale d'avant (D) comprenne une boucle dans laquelle le bout libre du fil est courbé en haut et en arrière le long le plan de la section centrale (24) et alors vers l'extérieur envers le côté de la selle (12) à un angle à la section centrale (24).

10. Une selle pour bicyclettes (10) selon la revendication 9, **caractérisée** de sorte que l'angle soit substantiellement de quatre neuf dix (90°) degrés.

11. Une selle pour bicyclettes (10) selon la revendication 7, **caractérisée** de sorte que la section terminale d'arrière (28) comprenne :
Une section première (A) située en direction verticalement essentiellement perpendiculaire à la section centrale (24) mais quelque peu envers l'extérieur au plan de la section centrale (24), une deuxième section (B) située essentiellement à des angles droites par rapport à la première section (A) et tournée en dehors et essentiellement parallèle par rapport à la section d'avant finale (D) et une troisième section (C) courbée en avant essentiellement à l'angle droite à la section seconde (B) envers le bout finale de la section d'avant (D).

12. Une selle pour bicyclettes (10) selon la revendication 7, **caractérisée** de sorte que le rail de droite et le rail de gauche (16, 18) soient des images de miroir de l'un l'autre.

13. Une selle pour bicyclettes (10) selon quelconques revendications citées en haut **caractérisée** de sorte que les rails (16, 18) soient fixés au côté en dessous de la selle (12) par moyen de serre joints (30) ou des attaches semblables, situées le long de la deuxième, de la troisième section et des sections finales en avant (B, C, D).

14. Une selle pour bicyclettes (10) selon la revendication 7 à 13 **caractérisée** de sorte que la deuxième section (B) de l'extrémité de l'arrière section (28) de chaque rail agisse comme barre de torsion.

15. Une selle pour bicyclettes (10) selon quelconque revendication précédente, où la surface portante (12) est attachée à une porte selle à son bout de montée.
